# EUROPÄISCHE PATENTANMELDUNG

(11) **EP 1 229 276 A2**
(43) Veröffentlichungstag der Anmeldung: **07.08.2002**
(21) Anmeldenummer: 01127985.8
(22) Anmeldetag: 24.11.2001
(51) Int. Cl.: F16K 5/04, F16K 5/12

(54) **Ventil für eine sanitäre Armatur**

(30) Priorität: 01.02.2001 DE 10104888
(71) Anmelder: Kludi GmbH & Co. KG, 58706 Menden (DE)
(72) Erfinder: Schneider, Anton, 58708 Menden (DE)
(74) Vertreter: COHAUSZ DAWIDOWICZ HANNIG & PARTNER

(57) **Zusammenfassung**

Die Erfindung betrifft ein Ventil für eine sanitäre Armatur, mit wenigstens zwei Wasserabgängen (5a,5b) wenigstens einem Wasserzufluß (10) und einem um eine Drehachse (11) drehbaren Ventilstellglied (2) zur Absperrung/Dosierung und Verteilung des zufließenden Wassers, wobei in dem Ventilkörper (1) ein hohlzylindrisches um seine Zylinderachse (11) drehbares und von innen mit Wasser beaufschlagtes Ventilstellglied (2) angeordnet ist, welches in der Zylinderwandung wenigstens eine Durchgangsöffnung (3a,3b) aufweist und daß durch Drehung des Ventilstellgliedes (2) eine wenigstens teilweise Überdeckung zwischen einer Durchgangsöffnung (3a,3b) und einer Mündungsöffnung (4a,4b) eines Wasserabganges (5a,5b) einstellbar ist.

## Beschreibung

Die Erfindung betrifft ein Ventil für eine sanitäre Armatur, mit wenigstens zwei Wasserabgängen, wenigstens einem Wasserzufluss und einem um eine Drehachse drehbaren Ventilstellglied zur Absperrung/Dosierung und Verteilung des zufließenden Wassers.

Ein derartiges Ventil ist zum Beispiel aus der EP 0 801 255 bekannt. Dieses Dokument offenbart eine Drehschieberanordnung, mit als Ventilstellglied übereinander angeordneten Scheiben, bei denen durch Verdrehung gegeneinander entsprechende Öffnungen mit zugeordneten Wasserabgängen geöffnet oder geschlossen werden. Hierbei wird durch die Drehrichtung ausgewählt, welcher Wasserabgang mit Wasser beaufschlagt werden soll und durch die Drehweite wird die Wassermenge pro Zeiteinheit eingestellt.

Bei derartigen Drehschieberanordnungen wird üblicherweise auf Keramik als Material der Scheiben zurückgegriffen, da dieses Material hochwertige Oberflächen, eine leichte Verdrehbarkeit und Dichtigkeit der Scheiben untereinander gewährleistet. Keramik ist jedoch ein schwer zu bearbeitendes teures Material.

Aufgabe der Erfindung ist es, ein Ventil für eine sanitäre Armatur bereitzustellen, bei dem eine Absperrung/Dosierung und ebenfalls eine Verteilung des zufließenden Wassers mittels konstruktiv leicht herzustellender Elemente möglich ist..

Die Aufgabe wird dadurch gelöst, dass in dem Ventilkörper des Ventils ein hohlzylindrisches um seine Zylinderachse drehbares und von innen mit Wasser beaufschlagtes Ventilstellglied angeordnet ist, welches in der Zylinderwandung wenigstens eine Durchgangsöffnung aufweist und dass durch Drehung des Ventilstellgliedes eine wenigstens teilweise Überdeckung zwischen einer Durchgangsöffnung und einer Mündungsöffnung eines Wasserabganges einstellbar ist.

Bei einer derartigen Konstruktion strömt beispielsweise in der Temperatur vorgemischtes Wasser von einem Thermostaten in der sanitären Armatur in das hohlzylindrische Ventilstellglied ein und wird aus dem Inneren dieses Ventilstellgliedes mittels Verdrehung durch die wenigstens eine vorgesehene Durchgangsöffnung hindurch auswählbaren Mündungsöffnungen zugeführt, in die jeweils ein Wasserabgang, beispielsweise für die Wanne oder für die Brause mündet.

So kann durch eine einfache Verdrehung das zuströmende Wasser einer beliebig auswählbaren Mündungsöffnung und somit jedem in der sanitären Armatur vorgesehenen Wasserabgang, von denen mehrere vorgesehen sein sollten, zugeleitet werden.

In dem Ventilstellglied können mehrere Durchgangsöffnungen vorgesehen sein, so dass mit einem erfindungsgemäßen Ventil zum einem mehrere Wasserabgänge gleichzeitig angesteuert werden können, oder dass zum anderen durch die Anordnung der Öffnungen unter einem bestimmten Winkel zueinander die Drehweite bestimmbar ist, nach der das erfindungsgemäße Ventil von einem Wasserabgang auf einen oder mehrere Wasserabgänge umschaltet.

Um zu gewährleisten, dass das in das Innere des Ventilstellgliedes zufließende Wasser definiert nur in den gewünschten Wasserabgang eingeleitet wird, ist es vorgesehen, dass die Oberfläche des Ventilstellgliedes gedichtet an den Mündungsöffnungen der Wasserabgänge anliegt. Die Dichtung zwischen dem Ventilstellglied und den Mündungsöffnungen lässt sich beispielsweise dadurch erreichen, dass die Mündungsöffnungen, die z.B. einen runden Querschnitt aufweisen, von einem O-Ring umgeben sind, an dem die Oberfläche des Ventilstellgliedes anliegt. Diese Art der Dichtung kann dadurch optimiert werden, dass die Nut, in der der O-Ring einliegt, in ihrem Verlauf an die Krümmung der Oberfläche des Ventilstellgliedes angepasst ist.

Eine andere Möglichkeit der Dichtung ergibt sich zum Beispiel dadurch, dass der Oberflächenbereich des Ventilstellgliedes durch Einschliff direkt an den die Mündungsöffnung umgebenden Bereich eines Wasserabganges angepasst ist. Zwar ist eine derartige Anpassung der verschiedenen Ventilteile durch Einschliff konstruktiv aufwendiger, jedoch wird hierdurch die Einbringung eines O-Ringes und entsprechender Aufnahmenuten eingespart.

Die Drehung des Ventilstellgliedes innerhalb des Ventils für die sanitäre Armatur lässt sich auf konstruktiv einfache Weise dadurch realisieren, dass das Ventilstellglied drehbar in einer entsprechenden Bohrung des Ventilkörpers einliegt, über die insbesondere eine Lagerung des Ventilstellgliedes realisierbar ist.

Um eine Dichtigkeit der Anordnung zu erreichen, ist es bei dieser Konstruktion zum Beispiel vorgesehen, zwischen dem Ventilstellglied und dem Bohrungsinneren eine Dichtung anzuordnen, die gleichzeitig eine Lagerung des Ventilstellgliedes bildet.

So kann vorzugsweise auf dem äußeren Umfang des Ventilstellgliedes in einer koaxial verlaufenden Nut wenigstens ein O-Ring angeordnet sein, der dichtend am Ventilstellglied und am Inneren der Bohrung anliegt. So wird vermieden, dass zulaufendes Wasser durch eine Durchgangsöffnung hindurchtritt und so dann durch den Spalt zwischen Ventilstellglied und dem Bohrungsinneren entweicht.

Eine bessere Lagerung des Ventilstellgliedes ergibt sich dadurch, dass das Ventilstellglied vorzugsweise mit wenigstens zwei dieser koaxial verlaufenden O-Ringe versehen wird. Hierdurch kann bei einer entsprechenden Beabstandung der O-Ringe voneinander erreicht werden, dass das Ventilstellglied bezüglich seiner vorgesehenen Drehachse verkippungssicher in dem Bohrungsinneren des Ventilkörpers gelagert ist. Darüber hinaus erhöhen mehrere Dichtringe die Dichtigkeit des Gesamtsystems.

Ebenfalls kann zwischen Ventilstellglied und Bohrung ein Zylinder aus elasischen Material eingesetzt sein, der Ausnehmungen im Bereich der Mündungsöffnungen der Wasserabgänge aufweist und das Ventilstellglied im übrigen vollständig umschließt.

Eine alternative Ausführungsform, die Dichtigkeit zwischen Ventilstellglied und Bohrung des Ventilkörpers zu erreichen, kann zum Beispiel darin bestehen, Bohrung und Ventilstellglied aufeinander einzuschleifen. Hierdurch wird bei einer guten Drehbarkeit gewährleistet, dass durch das Null-Spiel zwischen Ventilstellglied und Bohrung eine Dichtigkeit des Ventilkörpers erreicht wird.

Bei den beschriebenen Ausführungen kann als Material für das Ventilstellglied und den Ventilkörper beispielsweise Metall eingesetzt werden. Verschiedene Metalle können zum Einsatz kommen wie beispielsweise Messing, welches im sanitären Bereich aufgrund seiner bekannten Materialeigenschaften bevorzugt eingesetzt wird.

Alternativ besteht auch die Möglichkeit, für das Material des Ventilstellgliedes einen Kunststoff oder allgemein elastische Materialien auszuwählen.

Eine derartige Auswahl hat den Vorteil, dass Ventilstellglied und Bohrungsinneres ohne einen aufwendigen Einschliff derart aneinander angepasst werden können, dass sich durch die Elastizität des Materials des Ventilstellgliedes automatisch eine Abdichtung ergibt. Durch die besondere Auswahl des elastischen Materials lässt sich auch gezielt Einfluss auf die Gleiteigenschaften zwischen Ventilstellglied und Bohrung im Ventilkörper nehmen, so dass eine leichte Drehbarkeit des Ventilstellgliedes selbst bei einer dichtenden Anlage des Ventilstellgliedes am Bohrungsinneren gesichert ist. Ein bevorzugtes Material für das Ventilstellglied stellt beispielsweise der Kunststoff PTFE dar, welcher besonders gute Eigenschaften hinsichtlich Gleitreibung und Dichtigkeit aufweist.

Wie vorangehend erwähnt, ergeben sich bevorzugte Ausgestaltungen dadurch, dass das Ventilstellglied nicht nur eine Durchgangsöffnung aufweist. Bei lediglich einer Durchgangsöffnung bedarf es zur Umstellung zwischen verschiedenen Wasserabgängen einer Drehung des Ventilstellgliedes z.B. mittels eines daran angekoppelten Bedienelementes, beispielsweise eines Drehknaufs, um einen Winkelbereich, der dem Winkel zwischen den beiden Mündungsöffnungen der entsprechenden Wasserabgänge entspricht. Sind die beiden Mündungsöffnungen der Wasserabgänge beispielsweise unter 90° zueinander angeordnet, so bedarf es einer Drehung um 90° in einer Richtung, um den Wasserfluss von einem Abgang auf den anderen Wasserabgang umzustellen. In dem Fall, dass die Umstellung rückgängig gemacht werden soll, bedarf es der Drehung des Ventilstellgliedes, um den gleichen Winkelbereich in der anderen Drehrichtung oder aber in der gleichen Drehrichtung um einen Winkelbereich von 270°.

Bevorzugt ist es vorgesehen, das Ventilstellglied mit zwei Durchgangsöffnungen auszustatten, die insbesondere einander gegenüberliegend angeordnet sind. Durch diese Ausgestaltung wird erreicht, dass in dem Fall, wenn die entsprechenden Mündungsöffnungen der Wasserabgänge in 90° zueinander orientiert sind, eine Drehung des Ventilstellgliedes um 90° egal in welche Richtung ausreichend ist, um zwischen den beiden Wasserabgängen hin und her zuschalten. Dies bietet den Vorteil, dass es einem Benutzer überlassen ist, in welche Richtung er das Ventilstellglied mittels eines Bedienelementes verdreht, um von einem in den anderen Wasserabgang umzuschalten.

Durch eine entsprechende Erhöhung der Anzahl der Durchgangsöffnungen innerhalb des Ventilstellgliedes besteht weiterhin die Möglichkeit, den Winkelbereich für eine alternierende Umstellung zwischen den Wasserabgängen zu verkleinern.

Neben der reinen Umstellfunktion zwischen den Wasserabgängen übernimmt das Ventilstellglied ebenfalls die Einstellung der Wassermenge, die aus dem Inneren des Ventilstellgliedes durch die entsprechenden Öffnungen den Wasserabgängen zugeleitet wird. Diese Mengenregulierung erfolgt durch eine mehr oder weniger große teilweise Überdeckung, sowohl der Durchgangsöffnungen in dem Ventilstellglied als auch der Mündungsöffnungen der Wasserabgänge, wodurch der effektive Durchgangsquerschnitt beeinflußbar ist. Hierbei ist zu berücksichtigen, dass bei einer üblichen kreisrunden Ausgestaltung der einander gegenüberliegenden Öffnungen sich lediglich eine relativ grobe Möglichkeit der Mengenregulierung ergibt.

Es entspricht daher einer bevorzugten Ausführung, die Durchgangsöffnungen die in dem Ventilstellglied angeordnet sind, abweichend von einer üblichen Kreisform auszubilden.

Eine bevorzugte Ausbildung wird darin gesehen, dass die Durchgangsöffnung tropfenförmig oder z.B. keilförmig ausgebildet wird. Dadurch ergibt sich bei einer entsprechenden Drehung des Ventilstellgliedes zunächst eine Überdeckung des spitz zulaufenden Bereiches der Durchgangsöffnung mit der Mündungsöffnung des gewünschten Wasserabganges, wodurch sich eine sehr genaue Regulierung bei geringer Durchgangsmenge erreichen lässt. Erst bei einer weiteren Verdrehung wird der resultierende Gesamtquerschnitt zwischen Durchgangsöffnung und Mündungsöffnung weiter vergrößert, bis dass der breite Bereich der tropfenförmig oder keilförmig ausgestalteten Durchgangsöffnung über der Mündungsöffnung des Wasserabganges zum Liegen kommt.

Es ergibt sich daher mit dem erfindungsgemäßen Ventil und dem darin angeordneten Ventilstellglied die Möglichkeit, durch entsprechende Auswahl der Geometrie der Durchgangsöffnung gewünschte Regelcharakteristiken des Ventils hinsichtlich der Mengenregulierung auszuwählen.

Bei der vorliegenden Ventilkonstruktion wird beispielsweise von einem Thermostaten in das Ventil einströmende Wasser in das Innere des Ventilstellgliedes eingeleitet. Da das Ventilstellglied ein drehbares Element ist, bedarf es einer besonderen Abdichtung zwischen dem Ventilstellglied und der Wasserzufuhr innerhalb des Ventils.

Eine bevorzugte Ausgestaltung, um eine derartige Abdichtung zu erreichen, ergibt sich dadurch, dass koaxial zum Ventilstellglied in dessen Inneren ein mit dem Zulaufwasser beaufschlagtes Rohr angeordnet ist. Hierbei ist eine Abdichtung zwischen dem Rohr und dem Inneren Bereich des Ventilstellgliedes vorgesehen, die eine Dichtigkeit auch bei einer Drehung der beiden Elemente zueinander gewährleistet.

Diese Abdichtung kann auf die Art und Weise erfolgen, wie es bereits bei der Abdichtung zwischen Ventilstellglied und Bohrung innerhalb des Ventilkörpers beschrieben wurde, d. h. auf besonders einfache Art und Weise dadurch, dass zwischen dem Rohr und dem Inneren des Ventilstellgliedes ein oder mehrere O-Ringe angeordnet sind, die koaxial das mit Zulaufwasser beaufschlagte Rohr umgeben.

Ebenfalls besteht die Möglichkeit, beide Elemente durch Einschliff gegeneinander zu dichten, oder durch die Auswahl entsprechender elastischer Materialien beim Ventilstellglied, dem Zulaufrohr oder beiden eine Dichtigkeit ohne die Hinzufügung weiterer Dichtmittel zu erreichen.

Eine besonders bevorzugte Ausgestaltung ergibt sich dadurch, dass das Ventilstellglied auf dem inneren Rohr statt in der Bohrung des Ventilkörpers drehbar gelagert ist. Das innere Rohr ist bei dieser Ausgestaltung in seiner Dimension, d. h. seiner Länge und seinem Durchmesser derart angepasst, dass es als Drehlagerung für das auf dem Rohr liegende Ventilstellglied dient.

Ebenfalls können gleichzeitig beide Lagerungen, sowohl am inneren Rohr als auch an der Bohrung des Ventilkörpers verwirklicht sein. Hierdurch wird insgesamt die Lagerung des Ventilstellgliedes verbessert und durch die deutlich präzisere und gegen eine Verkippung gesicherte Lagerung eine erweiterte Gesamtdichtigkeit des Systems erreicht.

In allen Fällen können Ventilstellglied und Rohr durch die genannten Maßnahmen gegeneinander gedichtet sein.

Die Lagerung wird besonders dadurch verbessert, dass das Rohr welches mit Zulaufwasser beaufschlagt ist, sich vollständig durch das Innere des Ventilstellgliedes erstreckt. Hierdurch ergibt sich dementsprechend eine Lagerung des Ventilstellgliedes über seine gesamte Länge.

Um nun zu erreichen, dass das durch das Rohr zulaufende Wasser den inneren Bereich des Ventilstellgliedes beaufschlagt, weist das Rohr Bohrungen auf.

So kann das Rohr mit einer Vielzahl von Bohrungen durchsetzt sein, damit das zulaufende Wasser durch dieses Rohr hindurchtritt und gegen die Innenseite des Ventilstellgliedes drückt.. Diese Konstruktion ist besonders dann ausgewählt, wenn die Dichtung zwischen dem inneren Rohr und dem Ventilstellglied lediglich an dem oberen und unteren Endbereich des Ventilstellgliedes beispielsweise mittels eines dort jeweils angeordneten O-Ringes erfolgt. In diesem Fall ergibt sich zwischen den O-Ringen und zwischen dem inneren Rohr und dem Ventilstellglied ein Bereich, in dem das Wasser eindringen kann, um von dort durch die genannten Durchgangsöffnungen dem eingestellten Wasserabgang zugeführt werden kann.

In dem Fall, dass das Rohr und das Ventilstellglied beispielsweise durch Einschliff oder bei einer Auswahl eines elastischen Materials über die gesamte Länge des Ventilstellgliedes bzw. des Rohres gegeneinander gedichtet sind, werden die Bohrungen in dem Rohr bevorzugt derart angeordnet, dass sie den Mündungsöffnungen der Wasserabgänge gegenüberliegen, insbesondere mit diesen Fluchten.

Bei dieser Konstruktion ergibt sich für das Wasser ein Durchtrittskanal zwischen dem Inneren des Rohres und der Mündungsöffnung des Wasserabganges, der durch die Zylinderwandung des Ventilstellgliedes bei einer Verdrehung desselben geschlossen oder geöffnet werden kann, wobei die Öffnungs- und Schließcharakteristik durch die Geometrie der Durchgangsöffnung des Ventilstellgliedes bestimmt wird.

Ein Ausführungsbeispiel des erfindungsgemäßen Ventils ist in den nachfolgenden Figuren dargestellt.

Es zeigen:
- Figur 1:: einen Querschnitt durch ein erfindungsgemäßes Ventil und
- Figur 2:: eine Aufsicht auf ein Ventilstellglied mit darin ausgebildeter trpfenförmiger Durchgangsöffnung.

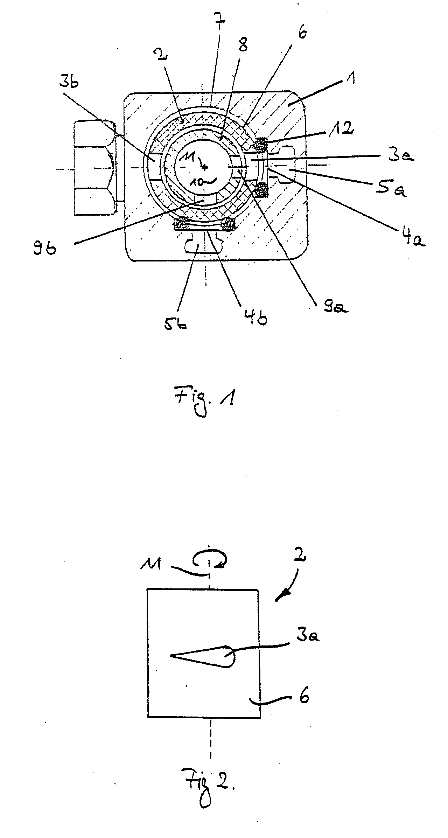

Die Figur 1 zeigt einen Ventilkörper 1, mit einer darin ausgebildeten senkrecht zur Blattebene verlaufenden Bohrung 7, in der ein Ventilstellglied 2 einliegt. Der Ventilkörper 1 ist mit Wasserabgängen 5a und 5b ausgestattet, die jeweils ihnen zugeordnete Mündungsöffnungen 4a und 4b aufweisen, die insbesondere radial in die Bohrung 7 des Ventilkörpers einmünden. Im vorliegenden Ausführungsbeispiel liegen die Zentren der beiden Mündungsöffnungen 4a und 4b innerhalb der Blattebene unter 90 Grad zueinander, bezogen auf die Drehachse 11.

Das Ventilstellglied 2 ist als Hohlzylinder ausgebildet, in dessen Wandung zwei Durchgangsöffnungen 3a und 3b angeordnet sind, die zueinander unter 180°, d.h. einander gegenüberliegend angeordnet sind.

Die Konstruktion ist hier derart ausgewählt, dass die Mündungsöffnungen 4a und 4b der Wasserabgänge 5a und 5b von O-Ringen 12 umgeben sind, um die Durchgangsöffnungen 3a und 3b gegen die Mündungen 4a und 4b zu dichten, so dass zufließendes Wasser nicht in den Spalt zwischen Ventilstellglied und Ventilkörper 1 eindringen kann.

Im Inneren des Ventilstellgliedes 2 ist koaxial zu diesem ein Rohr 8 angeordnet, durch welches Wasser, zum Beispiel von einem Thermostaten der sanitären Armatur in das Ventil eingeleitet wird. Dieses Rohr 8 ist nicht drehbar ausgebildet und bildet die Lagerung des Ventilstellgliedes 2, welches in der Darstellung um die Drehachse 11 drehbar ist. In der Abbildung ist in nicht dargestellter Weise, zum Beispiel durch O-Ringe sowohl der Ring 8 gegen das Ventilstellglied 2 gedichtet als auch das Ventilstellglied 2 gegen das Ventilgehäuse 1.

Das innere Rohr 8 weist zwei zueinander unter 90° angeordnete Bohrungen 9a und 9b auf, durch die zulaufendes Wasser aus dem Inneren 10 des Rohres 8 bei entsprechender Einstellung des Ventilstellgliedes den Wasserabgängen 5a oder 5b zugeführt werden kann.

In dem dargestellten Fall der Figur 1 liegen die Bohrung 9a des Rohres 8 und die Mündungsöffnung 4a des Wasserabganges 5a einander fluchtend gegenüber, wobei das Ventilstellglied 2 derart eingestellt ist, dass der Kanal zwischen dem Inneren 10 des Rohres und des Wasserabganges 5a durch die Öffnung 3a freigegeben ist. In dieser Situation ist der Kanal zwischen dem Inneren 10 und der Mündungsöffnung 4b des Wasserabganges 5b durch das Ventilstellglied 2 verschlossen.

Durch die Anordnung zweier einander gegenüberliegender Durchgangsöffnungen 3a und 3b ist es im dargestellten Fall irrelevant, ob das Ventilstellglied z.B. mittels eines Drehknaufes rechts herum oder links herum gedreht wird, um das zulaufende Wasser von dem Wasserabgang 5a zum Wasserabgang 5b umzustellen. Bei einer Drehung im Uhrzeigersinn wird die Mündungsöffnung 4a des Wasserabganges 5a durch die Wand des Ventilstellgliedes 2 verschlossen, wobei nach einer Verdrehung um 90° die Mündungsöffnung 4b des Wasserabganges 5b durch die Öffnung 3a komplett geöffnet ist.

Bei einer Drehung entgegen dem Uhrzeigersinn erfolgt die Öffnung des Wasserabganges 5b dadurch, dass die Durchgangsöffnung 3b des Ventilstellgliedes zwischen der Bohrung 9b und der Mündungsöffnung 4b angeordnet wird.

Eine einfache Art der Mengenregulierung des durchfließenden Wassers lässt sich dadurch realisieren, dass eine bestimmte Geometrie der Durchgangsöffnungen 3a und 3b ausgewählt wird. In der Figur 2 ist beispielsweise eine tropfenförmige Durchgangsöffnung 3a, 3b innerhalb eines Ventilstellgliedes 2 dargestellt.

Bei einer Verdrehung in eine Richtung wird daher beispielsweise aus der Absperrstellung die Öffnung 3a derart relativ zur Mündungsöffnung 4b verdreht, dass das spitze Ende der Durchgangsöffnung 3a langsam den Kanal zwischen dem Inneren 10 des Rohres und dem Wasserabgang 5b öffnet, bis das große stumpfe Ende der Durchgangsöffnung 3a den Kanal vollständig öffnet.

Durch die lediglich einseitig spitz ausgebildete Geometrie der Durchgangsöffnung 3a bedarf es im dargestellten Ausführungsbeispiel immer der Drehung in einer bestimmten Richtung, um ein sanftes Öffnen eines Wasserabganges zu ermöglichen.

Um ein sanftes Öffnen auch in beiden Drehrichtungen zu ermöglichen, ist es vorgesehen, die Durchgangsöffnung im wesentlichen trapezförmig auszugestalten, d. h. die Durchgangsöffnung erweitert sich ähnlich wie in der Darstellung der Figur 2 von einem spitzen Ende über den Umfang des Ventilstellgliedes bis zur einer maximalen Breite, die beispielsweise über einen bestimmten Bereich beibehalten wird, bis sich diese maximale Breite wieder auf einen spitzen Bereich verjüngt.

Hierdurch ergibt sich die Möglichkeit, das erfindungsgemäße Ventil auch mit geringen Durchflussmengen zu betreiben, beziehungsweise ein sanftes fein regulierbares Öffnen und Schließen der Wasserabgänge in beiden Drehrichtungen zu ermöglichen.

Das beschriebene erfindungsgemäße Ventil bietet mit einfachen konstruktiven Mitteln eine Möglichkeit, zwischen verschiedenen Wasserabgängen durch eine einfache Drehung umzuschalten und gleichzeitig bei der Drehung eine Mengenregulierung des Wasserdurchflusses vorzunehmen.

## Patentansprüche

1. Ventil für eine sanitäre Armatur, mit wenigstens zwei Wasserabgängen (5a,5b) wenigstens einem Wasserzufluß (10) und einem um eine Drehachse (11) drehbaren Ventilstellglied (2) zur Absperrung/Dosierung und Verteilung des zufließenden Wassers, **dadurch gekennzeichnet, daß** in dem Ventilkörper (1) ein hohlzylindrisches um seine Zylinderachse (11) drehbares und von innen mit Wasser beaufschlagtes Ventilstellglied (2) angeordnet ist, welches in der Zylinderwandung wenigstens eine Durchgangsöffnung (3a,3b) aufweist und daß durch Drehung des Ventilstellgliedes (2) eine wenigstens teilweise Überdeckung zwischen einer Durchgangsöffnung (3a,3b) und einer Mündungsöffnung (4a,4b) eines Wasserabganges (5a,5b) einstellbar ist.

2. Ventil nach Anspruch 1, **dadurch gekennzeichnet, daß** die Oberfläche (6) des Ventilstellgliedes (2) gedichtet an den Mündungsöffnungen (4a,4b) anliegt.

3. Ventil nach einem der vorherigen Ansprüche, **dadurch gekennzeichnet, daß** das Ventilstellglied (2) drehbar in einer Bohrung (7) des Ventilkörpers (1) einliegt.

4. Ventil nach einem der vorherigen Ansprüche, **dadurch gekennzeichnet, daß** das Ventilstellglied (2) an ein Bedienelement, insbesondere einen Drehknauf gekoppelt ist.

5. Ventil nach einem der vorherigen Ansprüche, **dadurch gekennzeichnet, daß** zwischen Ventilstellglied (2) und Bohrungsinnerem wenigstens eine Dichtung angeordnet ist, die die Lagerung des Ventilstellgliedes (2) bildet.

6. Ventil nach einem der vorherigen Ansprüche, **dadurch gekennzeichnet, daß** auf dem äußeren Umfang des Ventilstellgliedes (2) wenigstens ein O-Ring angeordnet ist, der dichtend am Ventilstellglied (2) und dem Inneren der Bohrung (7) anliegt.

7. Ventil nach einem der vorherigen Ansprüche, **dadurch gekennzeichnet, daß** Ventilstellglied (2) und Bohrung (7) durch Einschliff gedichtet aneinander liegen.

8. Ventil nach einem der vorherigen Ansprüche, **dadurch gekennzeichnet, daß** das Ventilstellglied (2) aus einem elastischen Material besteht.

9. Ventil nach einem der vorherigen Ansprüche, **dadurch gekennzeichnet, daß** im Ventilstellglied (2) zwei Durchgangsöffnungen (3a,3b) angeordnet sind, die einander gegenüberliegen.

10. Ventil nach einem der vorherigen Ansprüche, **dadurch gekennzeichnet, daß** die Mündungsöffnungen (4a,4b) der Wasserabgänge (5a,5b) unter 90 Grad zueinander angeordnet sind.

11. Ventil nach einem der vorherigen Ansprüche, **dadurch gekennzeichnet, daß** koaxial zum Ventilstellglied (2) in dessen Innerem ein mit Zulaufwasser beaufschlagtes Rohr (8) angeordnet ist.

12. Ventil nach einem der vorherigen Ansprüche, **dadurch gekennzeichnet, daß** das Ventilstellglied (2) auf dem inneren Rohr (8) drehbar gelagert ist.

13. Ventil nach einem der vorherigen Ansprüche, **dadurch gekennzeichnet, daß** zwischen Ventilstellglied (2) und Rohr (8) wenigstens eine Dichtung angeodnet ist.

14. Ventil nach einem der vorherigen Ansprüche, **dadurch gekennzeichnet, daß** das Rohr (8) Bohrungen (9a,9b) aufweist, die den Mündungsöffnungen (4a,4b) der Wasserabgänge gegenüberliegen, insbesondere mit diesen fluchten.
